# EUROPÄISCHE PATENTSCHRIFT

(11) **EP 0 905 842 B1**
(45) Veröffentlichungstag und Bekanntmachung des Hinweises auf die Patenterteilung: **14.05.2008**
(21) Anmeldenummer: 98203201.3
(22) Anmeldetag: 22.09.1998
(51) Int. Cl.: H02B 7/08

(54) **Zum Aufstellen auf semi-öffentlichem Boden bestimmte Energieverteilungsstation zur Spannungsentnahme durch Privatpersonen oder Betriebe**
Power station placed on semi-public ground to supply a private subscriber or a company
Poste de distribution d'énergie placé à un endroit semi-publique pour alimenter un particulier ou une entreprise

(30) Priorität: 25.09.1997 NL 1007117
(43) Veröffentlichungstag der Anmeldung: 31.03.1999
(73) Patentinhaber: Odink & Koenderink B.V., 7482 CA Haaksbergen (NL); Ingenieursbureau Ebatech B.V., 1009 DC Amsterdam (NL)
(72) Erfinder: Metternich, Stefan Herman Jeroen, 7541 AJ Enschede (NL); Ekelmans, Marco, 1098 TB Amsterdam (NL)
(74) Vertreter: Boelsma, Gerben Harm

(56) Entgegenhaltungen:
- AT-B- 336 226
- GB-A- 2 274 668

## Beschreibung

Die Erfindung bezieht sich auf eine zum Aufstellen auf semi-öffentlichem Boden bestimmte Energieverteilungsstation, wie definiert im ersten Teil des Anspruchs 1.

Eine derartige Energieverteilungsstation ist im Dokument WO 95/34113 (siehe insbesondere die Ausführung nach Fig. 6 - 8) offenbart worden. Bei dieser bekannten Station nimmt der zweite Deckel die ganze obere Seite des Grubengehäuses ein. Dabei ist an einer Stelle in der Nähe der Vorderwand des Grubengehäuses und oberhalb der die Steckdosen enthaltenden Abteilung eine rechteckige Aussparung angebracht, die normalerweise vom ersten Deckel abgeschlossen ist. Bei geschlossenen Deckeln ist einerseits zwischen dem oberen Rand des Grubengehäuses und dem Umfangsrand des zweiten Deckels und andererseits zwischen dem Rand der Aussparung im zweiten Deckel und dem Umfangsrand des ersten Deckels eine Spalte vorhanden, wodurch (Regen)wasser in das Grubengehäuse hineinströmen kann, um durch eine Öffnung im Boden des Grubengehäuses abgeführt zu werden. Dabei bildet der erste Deckel die obere Wand eines durch die Aussparung im zweiten Deckel hindurch nach oben bewegbaren Kastens, in einer aufstehenden Wand desselben, die Steckdosen versenkt angeordnet sind.

Ein Nachteil dieser bekannten Energieverteilungsstation ist vor allem, daß der Kasten in der nach oben ausgefahreren Gebrauchslage beschädigungsempfindlich ist und ein hinderliches Obstakel bildet.

Die Erfindung beabsichtigt eine verbesserte Energieverteilungsstation zu schaffen, welche den genannten Nachteil nicht hat.

Erfindungsgemäß wird dieser Zweck mit einer gattungsgemäßen Energieverteilungsstation erreicht, welche die im zweiten Teil des Anspruchs 1 definierten Merkmale aufweist.

Eine bevorzugte Ausbildungsform der erfindungsgemäßen Energieverteilungsstation weisen die in Anspruch 2 und 3 definierten Merkmale auf.

Bei der erfindungsgemäßen Energieverteilungsstation braucht der erste Deckel nur zwecks Ingebrauchnahme einer Steckdose (kurzfristig) angehoben zu werden. Sobald die Verbindung des Verbrauchskabels mit der gewählten Steckdose zustande gebracht worden ist, kann der erste Deckel wieder geschlossen werden. Der schräg nach oben und nach innen verlaufende obere Teil der Vorderband des Grubengehäuses verschafft ja den erforderlichen Spielraum in Bezug auf den geschlossenen Deckel, durch welchen Spielraum das Verbrauchskabel von der betreffenden Steckdose nach außen geführt werden kann. Andererseits bildet dieser schräg verlaufende Vorderwandabschnitt zusammen mit dem im Abstand über den oberen Rand desselben hinweg verlaufenden vorderen Deckelrand eine wirksame Barriere gegen hineindringendes (Regen)wasser.

Das Grubengehäuse der erfindungsgemäßen Energieverteilungsstation kann dabei in der Weise aufgestellt werden, daß dessen Vorderwand mit der Außenseite des Bordsteines zusammenfällt. Das sich längs drei Seiten des Grubengehäuses erstreckende Rinnenprofil entwässert dann mit seinen freien Enden in die sich den Bordstein entlang erstreckende Rinne, während die schräg nach innen und nach oben biegende Vorderwand des Grubengehäuses ebenfalls in die Rinnen entwässern kann.

Zu bemerken ist, daß die Anwendung von zwei, sich je über die ganze Breite eines Grubengehäuses erstreckenden und, von der Vorderwand des Grubengehäuses her gesehen, hintereinander angeordneten Deckeln an sich aus der DE-A-2 706 959 bekannt ist. Dort handelt es sich um ein in den Boden einzusenkendes kastenförmiges Gehäuse, wobei die beiden Deckel in der Schließlage ringsherum mit einem nach unten umgebogenen Randteil um den oberen Rand des Gehäuses greifen. Auf der Trennlinie zwischen den beiden Deckeln ist ein sich quer über das Gehäuse erstreckendes U-Profil vorgesehen. Man vermißt dabei jedoch die mit derem oberen Teil schräg nach innen und nach oben biegende Wand, ebensowie das längs drei Seiten am oberen Rand des Gehäuses erstreckende Ringenprofil. Des weiteren entbehrt diese bekannte Konstruktion eine Abteilung mit Steckdosen.

Die Erfindung wird unten anhand der Zeichnung beispielsweise näher erläutert.

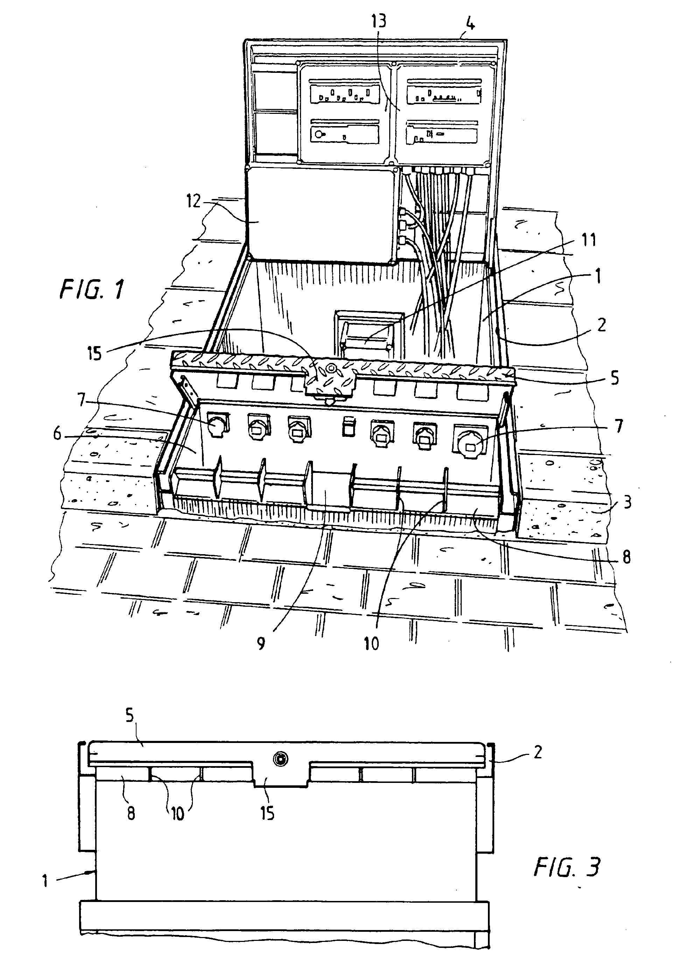

- Fig. 1: ist eine Perspektivdarstellung einer in einem Bürgersteig eingesenkten erfindungsgemäßen Energieverteilungsstation;
- Fig. 2: zeigt einen Vertikalschnitt gemäß einer senkrecht zu den Gelenkachsen der beiden Deckel stehenden Ebene;
- Fig. 3: zeigt eine Vorderansicht des oberen Abschnittes der Verteilungsstation in verschlossenem Zustand und
- Fig. 4: zeigt einen Vertikalschnitt durch die Mitte der die Steckdosen enthaltenden Abteilung.

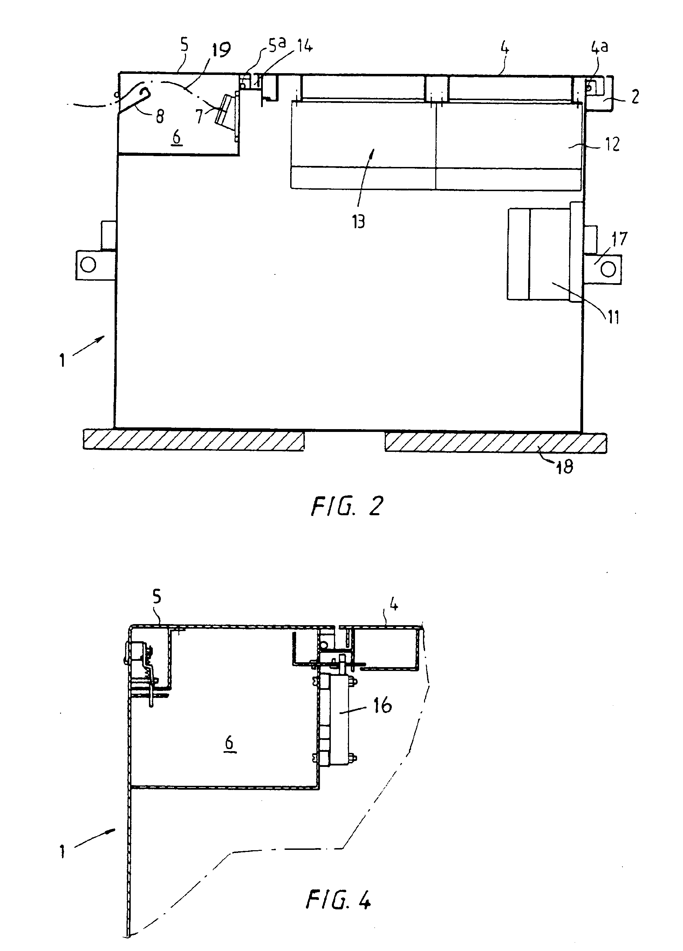

Die erfindungsgemäße Energieverteilungsstation hat ein rechteckiges Grubengehäuse 1 aus gegen Korrosion behandeltem Stahlblech. Das Grubengehäuse 1 ist oben am Rand mit einem Rinnenprofil 2 versehen, welches sich längs drei Seiten des Grubengehäuses 1 erstreckt und mit seinen offenen Enden in der Ebene der Außenseite eines Bordsteines 3 mündet. Das Grubengehäuse 1 ist durch zwei aus schwerem Stahlblech gefertigte Deckel 4 und 5 verschließbar, welche Deckel um parallele Achsen 4a, bzw. 5a (siehe Fig. 2) aufklappbar ausgebildet sind.

Vom Raum des Grubengehäuses ist eine an der Bordsteinseite befindliche Abteilung 6 abgetrennt. In dieser mittels des Deckels 5 verschließbaren Abteilung sind die für Privatgebrauch bestimmten Steckdosen 7 angeordnet.

Der obere Teil 8 der an der Bordsteinseite liegenden Wand des Grubengehäuses 1 biegt mit Ausnahme des Mittenteils, in dem eine Schloßaussparung 9 vorgesehen ist - schräg nach innen und nach oben ab, während sein oberer Rand gekräuselt ist.

Der schräg nach innen und nach oben verlaufende Wandabschnitt 8 ist dabei besetzt mit Quertrennwänden 10, wobei die zwei mitteleren Trennwände die Schloßaussparung 9 seitlich begrenzen.

Der sogenannten Übergangskasten 11 ist nach oben ausfahrbar an der vom Bordstein abgekehrten Wand des Grubengehäuses befestigt. In diesem Übergangskasten geht das unten hineintretende steife (5-adrige) unterirdische Kabel in ein verhältmäßig biegsames mehradriges Kabel über, das zum vom Deckel 4 getragenen Kasten 12 führt, in dem die unter Verwaltung des Energielieferanten stehende Schutz- und Meßapparatur vorzusehen ist.

Vom Kasten 12 führt ein Kabel zu einer ebenfalls vom Deckel 4 getragenen Einheit 13, welche durch gesonderte Kabel mit den in der Abteilung 6 befindlichen Steckdosen 7 verbunden ist. Innerhalb der Einheit 13 werden die über die unterschiedlichen Steckdosen 7 entnommenen Energiemengen gemessen und registriert.

Aus Fig. 2 is ersichtlich, daß auf der Trennlinie zwischen den beiden Deckeln 4 und 5 ein Rinnenprofil 14 vorgesehen ist, dessen beide Enden sich an den beiden einander gegenüberliegenden Abschnitten des den oberen Rand des Grubengehäuses entlang verlaufenden Rinnenprofil 2 anschließen. Wie weiterhin aus der Zeichnung ersichtlich ist, sind die beiden Deckel 4 und 5 mit nach unten umgebogenen Umfangsrandteilen versehen, welche in den Raum der Rinnenprofile 2 und 14 hineinragen.

An der Vorderseite (Bordsteinseite) erstreckt sich der Deckel 5 mit seinem umgebogenen Vorderrand über den schräg nach innen und nach oben verlaufenden Grubenwandteil 8 hinweg. Mit der Strich-Punktlinie 19 ist ein in eine Steckdose 7 gestecktes Kabel bezeichnet. Der Deckel 5 hat in der Mitte einen weiter nach unten ausragenden Randteil 15 mit einem dahinten fundierten Schloßmechanismus mit Hilfe dessen bei verschlossenem Deckel 5 die Schloßaussparung 9 abgedeckt wird und der Deckel 5 in der Schließlage verriegelt werden kann (siehe auch Fig. 4).

Aus Fig. 4 ist noch ersichtlich, daß an der hinteren Seite der hinteren Wand der Abteilung 6 ein Schloßmechanismus 16 angebracht ist, welches von der Abteilung 6 her begehbar ist, zum Verriegeln des Deckeln 4 in der Schließlage.

Das Grubengehäuse läßt sich unter Verwendung von Befestigungsösen 17 in eine vorab gegrabenen Grube bis auf eine Gründungsplatte 18 absenken.

Bei Anordnung in der Nähe eines Sinkkastens kann die Abteilung 6 gegebenfalls über eine Abflußleitung oder einen Schlauch mit der Abflußschacht des Sinkkastens verbunden werden.

## Patentansprüche

1. Zum Aufstellen auf semi-öffentlichem Boden bestimmte Energieverteilungsstation zur Spannungsentnahme durch Privatpersonen oder Betriebe, mit einem bis gerade oberhalb Straßenhöhe, mehr insbesondere bis auf Bürgersteighöhe in den Boden einzusenkenden rechteckigen Grubengehäuse (1) mit einer Vorderwand, einer hinteren Wand und zwei einander gegenüberliegenden Seitenwänden, wobei unten im Grubengehäuse (1) ein zum Anschluß an einem unterirdischen Kabel bestimmter Übergangskasten (11) vorgesehen ist, und oben im Grubengehäuse (1) eine, angrenzend an der Vorderwand eine erste Abteilung (6) mit Steckdosen (7) und, angrenzend an der hinteren Wand, eine zweite Abteilung mit Kästen (12, 13) für Meßapparatur und für Durchverbindung zu den individuellen Steckdosen (7) vorgesehen sind, welche Abteilungen je von oben her zugänglich sind über einen zugehörigen ersten, b.z.w. zweiten Deckel (5 bezw. 4), welche Deckel (5, 4) unabhängig voneinander aus den normalen Schließlagen anzuheben sind, wobei um das Grubengehäuse (1) Wasserabflußmittel (2) vorgesehen sind, **dadurch gekennzeichnet, daß** der angrenzend an der Vorderwand vorgesehene Deckel (5) der ersten Abteilung (6) sich über die ganze Breite der Vorderwand erstreckt, und daß die beiden von der Vorderseite bis zur hinteren Seite gesehen, hintereinander angeordneten Deckel (5 und 4) um das Grubengehäuse (1) herum mit nach unten umgebogenen Deckelrandteilen über die Oberränder der Vorderwand, der hinteren Wand und der Seitenwände des Grubengehäuses greifen, wobei der obere Teil (8) der Vorderwand schräg nach innen und nach oben verlauft.

2. Energieverteilungsstation nach Anspruch 1, **dadurch gekennzeichnet, daß** das Grubengehäuse (1) oben am Rand ein sich über die hintere Wand und die beiden angrenzenden Seitenwände erstreckendes, an den Enden offenes Rinnenprofil (2) aufweist.

3. Energieverteilungsstation nach Anspruch 2, **dadurch gekennzeichnet, daß** ein sich auf der Trennlinie zwischen den beiden Deckeln (5 und 4) quer über das Grubengehäuse (1) erstreckendes Rinnenprofil (14) mit seinen Enden an den beiden parallelen Abschnitten des sich am oberen Rand des Grubengehäuses (1) erstreckenden Rinnenprofils (2) anschließt.

## Claims

1. Power distribution station intended for installation on semi-public land, for voltage tapping by private individuals or companies, with a rectangular low-lying housing (1) to be sunk into the ground to just above street level, more particularly to pavement level, with a front wall, a rear wall and two oppositely facing side walls, wherein a cable junction box (11) intended for connection to an underground cable is provided underneath in the low-lying housing (1), and a first compartment (6) with sockets (7), bordering the front wall, is provided above in the low-lying housing (1), and a second compartment with boxes (12, 13) for measuring equipment and for connection to the individual sockets (7) is provided bordering the rear wall, which compartments are each accessible from above via an associated first or respectively second cover (5, 4), which covers (5, 4) have to be lifted independently of one another from the normal closed positions, water drainage means (2) being provided around the low-lying housing (1), **characterised in that** the cover (5) of the first compartment (6) provided bordering the front wall extends over the whole width of the said front wall, and that the two covers (5 and 4) arranged behind one another, viewed from the front side to the rear side, grip all the way round the low-lying housing (1) with downwardly bent cover edge parts, via the upper edges of the front wall, rear wall and side walls of the low-lying housing, wherein the upper part (8) of the front wall runs inclined inwardly and upwardly.

2. Power distribution station according to claim 1, **characterised in that** the low-lying housing (1) comprises above at the edge a groove profiled section (2) open at the ends, extending over the rear wall and the two adjoining side walls.

3. Power distribution station according to claim 2, **characterised in that** a groove profiled section (14) extending crosswise over the low-lying housing (1) on the separating line between the two covers (5 and 4) is connected at its ends to the two parallel sections of the groove profiled section (2) extending over the upper edge of the low-lying housing (1).

## Revendications

1. Station de répartition d'énergie destinée à être installée sur un sol semi-public pour le prélèvement de tension par des particuliers ou des entreprises, comprenant un boîtier de fosse (1) rectangulaire à enfoncer dans le sol jusque juste au-dessus de la hauteur de rue, davantage en particulier jusqu'à la hauteur du trottoir, avec une paroi avant, une paroi arrière et deux parois latérales se faisant face, un caisson de transition (11) destiné au raccordement à un câble souterrain étant prévu en bas dans le boîtier de fosse (1) et un premier compartiment (6), contigu à la paroi avant, avec des prises (7) et, de façon contiguë à la paroi arrière, un second compartiment avec des caissons (12, 13) pour l'appareillage de mesure et pour la liaison avec les prises (7) individuelles étant prévus en haut dans le boîtier de fosse (1), lesquels compartiments sont accessibles chacun à partir du haut au moyen d'un premier respectivement second couvercle (5 ou 4) spécifique, lesquels couvercles (5, 4) peuvent être soulevés indépendamment l'un de l'autre à partir des positions de fermeture normales, des moyens d'écoulement d'eau (2) étant prévus autour du boîtier de fosse (1), **caractérisée en ce que** le couvercle (5), prévu de façon contiguë à la paroi avant, du premier compartiment (6) s'étend sur toute la largeur de la paroi avant et **en ce que** les deux couvercles (5 et 6), disposés l'un derrière l'autre, vus depuis le côté avant vers le côté arrière, s'appliquent autour du boîtier de fosse (1) avec des parties de bord de couvercle repliées vers le bas sur les bords supérieurs de la paroi avant, de la paroi arrière et des parois latérales du boîtier de fosse, la partie supérieure (8) de la paroi avant étant agencée en biais vers l'intérieur et vers le haut.

2. Station de répartition d'énergie selon la revendication 1, **caractérisée en ce que** le boîtier de fosse (1) présente en haut sur le bord un profilé de gouttière (2) s'étendant sur la paroi arrière et sur les deux parois contiguës et ouvert sur les extrémités.

3. Station de répartition d'énergie selon la revendication 2, **caractérisée en ce qu'**un profilé de gouttière (14) s'étendant sur la ligne de séparation entre les deux couvercles (5 et 4) transversalement au-dessus du boîtier de fosse (1) se raccorde par ses deux extrémités aux deux parties latérales du profilé de gouttière (2) s'étendant sur le bord supérieur du boîtier de fosse (1).
